# EUROPEAN PATENT SPECIFICATION

(11) **EP 3 820 953 B1**
(45) Date of publication and mention of the grant of the patent: **19.04.2023**
(21) Application number: 19834336.0
(22) Date of filing: 05.07.2019
(51) Int. Cl.: B01D 15/18, C09F 3/02, G01N 30/42, B01D 15/30

(54) **METHOD FOR DESULFURIZATION OF METHANOL**
VERFAHREN ZUR ENTSCHWEFELUNG VON METHANOL
PROCÉDÉ DE DÉSULFURATION DE MÉTHANOL

(30) Priority: 10.07.2018 SE 1850871
(43) Date of publication of application: 19.05.2021
(73) Proprietor: Stora Enso Oyj, 00101 Helsinki (FI)
(72) Inventor: KAVAKKA, Jari, 02180 Espoo (FI)
(74) Representative: Forsberg, Anna Karin
(86) International application number: PCT/IB2019/055744
(87) International publication number: WO 2020/012309

(56) References cited:
- WO-A1-2011/157803
- WO-A1-2013/083482
- CN-B- 105 385 716
- US-A- 5 718 810
- US-A1- 2002 050 476
- US-A1- 2016 083 252
- US-A1- 2016 237 011
- J. BRENT FRIESEN ET AL: "Countercurrent Separation of Natural Products: An Update", JOURNAL OF NATURAL PRODUCTS, vol. 78, no. 7, 15 July 2015 (2015-07-15), pages 1765-1796, XP055674334, US ISSN: 0163-3864, DOI: 10.1021/np501065h
- J. BRENT FRIESEN et al.: "Countercurrent Separation of Natural Products: An Update", Journal of natural Products, vol. 78, 2015, pages 1765-1796, XP055674334,

## Description

### Technical field

The present invention relates to methods for removal of sulfur containing impurities from methanol, particularly methanol obtained from the Kraft pulping process.

### Background

Methanol is obtained as a side product from softwood pulping using the Kraft process. Methanol obtained from the Kraft-process (also referred to herein as "Kraft methanol") contains malodorous sulfur and organosulfur compounds as impurities. These sulfur-containing compounds include e.g. dimethyl sulfide (DMS), and dimethyl disulfide (DMDS).

The presence of these malodorous sulfur impurities rules out any commercial utilization of this stream, and instead, the Kraft methanol is typically converted into energy.

Kraft methanol has several unique characteristics that prevent efficient purification by simple distillation, notably the presence of an azeotrope between methanol and DMDS, and the presence of ionizable sulphur compounds such as hydrogen sulphide and methyl mercaptan, which can dissociate making them very difficult to remove from the methanol distillation.

Existing methods for purification of Kraft methanol typically involve complex distillation arrangements, optionally combined with acid or alkaline oxidation treatments to separate the various fractions.

US20160237011A1 describes a method for purifying raw methanol containing sulfur compounds, comprising washing with a non-polar organic solvent.

In addition to the sulfur-containing compounds, the methanol obtained from the Kraft process also typically comprises low concentrations of turpentine. Turpentine is a commercial product and it is sold mainly to distillers who fractionate it to sulfur free turpentine and/or to individual terpenes to be sold as fine chemicals. The major use of turpentine is as a raw material for the chemical industry. Terpenes and other compounds extracted from turpentine can be used for such products as tires, plastics, adhesives, flavors and fragrances, cosmetics, paints, and pharmaceuticals.

In-house production of commercial grade methanol from the Kraft methanol could add value and offer integration advantages in the mill. Commercial grade methanol can for example be used in the manufacture of ClO₂ for the Kraft pulping process, or be sold for other industrial uses. Additionally, recovery of turpentine from the Kraft methanol could further increase the production capacity of commercial crude sulfate turpentine (CST) of the Kraft plant. Therefore, the development of an efficient and cost-effective purification process for Kraft methanol would be highly desirable.

### Description of the invention

It is an object of the present disclosure to alleviate at least some of the disadvantages of current methods for purification and desulfurization of methanol obtained from the Kraft pulping process (also referred to herein as "Kraft methanol").

It is another object of the present disclosure to provide a method for desulfurization of Kraft methanol which results in methanol having reduced levels of sulfur and organosulfur compounds as impurities.

It is another object of the present disclosure to provide a method for desulfurization of Kraft methanol which results in less or no unwanted oxidation side products and/or simplified distillation procedures.

It is yet another object of the present disclosure to provide a method for desulfurization of Kraft methanol, which allows for simultaneous recovery of CST present in the Kraft methanol.

Other objects may be to obtain environmental, health and/or economical benefits of reduced emission of chemicals used in the prior art methods for acid or alkaline oxidation treatments.

According to a first aspect illustrated herein, there is provided a method for removing sulfur-containing compounds from methanol, said method comprising the step of:
subjecting methanol comprising sulfur-containing compounds to centrifugal countercurrent chromatography (CCCC) to remove sulfur-containing compounds.

The inventive method, also referred to herein as the "desulfurization method", allows for purification and desulfurization of methanol comprising sulfur-containing compounds, particularly Kraft methanol, using simple distillation procedures and resulting in desulfurized methanol or having reduced levels of sulfur and organosulfur compounds as impurities.

The methanol to be treated using the desulfurization method of the present disclosure is typically obtained from a Kraft pulping process. Methanol obtained from the Kraft-process contains sulfur and organosulfur compounds as impurities. In Kraft methanol, these malodorous sulfur-containing compounds include e.g. elemental sulfur, dimethyl sulfide (DMS), methyl mercaptan and dimethyl disulfide (DMDS). The Kraft methanol also typically comprises fractions of crude sulfate turpentine (CST) and water.

Countercurrent chromatography (CCC) encompasses a collection of related liquid chromatography techniques that employ two immiscible liquid phases without a solid support. The two liquid phases are brought in contact with each other as at least one of the phases is pumped through a column or a series of chambers containing both phases. One of the liquid phases is often used as a stationary phase that is held in place by gravity or centrifugal force.

CCC is used to separate, identify, and/or quantify the chemical components of a mixture. Separation in CCC is based on differences in compound distribution coefficient (K_{D}) in a biphasic solvent system. Dynamic mixing and settling allows the components to be separated by their respective solubilities in the two phases.

The recent developments of traditional countercurrent chromatography (CCC) with a centrifugal approach, so called "centrifugal force assisted countercurrent chromatography", or simply "centrifugal countercurrent chromatography" (CCCC), is opening the possibility for large volume separations as well as broadening the possible solvent system space.

Some types of countercurrent chromatography, involve a true countercurrent process where the two immiscible phases flow past each other and exit at opposite ends of the column. In other types of countercurrent chromatography, one liquid acts as a stationary phase, which is retained in the column while a mobile phase is pumped through it.

In CCCC, the liquid stationary phase is held in place by centrifugal force. The two main modes by which the stationary phase is retained by centrifugal force are "hydrostatic" and "hydrodynamic". In the hydrostatic method, often referred to as centrifugal partition chromatography (CPC), the column is typically rotated around a central axis. The hydrodynamic method, often referred to as high-speed or high-performance countercurrent chromatography (HSCCC and HPCCC), typically relies on the Archimedes screw force in a helical coil to retain the stationary phase in the column. Recent developments, particularly in HPCCC has created a viable option to existing liquid purification techniques like high-performance liquid chromatography (HPLC) and distillation.

The inventive method uses CCCC to remove sulfur-containing compounds from methanol. The CCCC of the inventive method may for example be selected from the group consisting of centrifugal partition chromatography (CPC), high-performance countercurrent chromatography (HPCCC) and high-speed countercurrent chromatography (HSCCC). In some embodiments of the inventive method, the CCCC is selected from the group consisting of high-performance countercurrent chromatography (HPCCC) and high-speed countercurrent chromatography (HSCCC). In a preferred embodiment, the CCCC is HPCCC.

In a preferred embodiment, the CCCC is HPCCC. The operating principle of an HPCCC system requires a column consisting of a tube coiled around a bobbin. The bobbin is rotated in a double-axis gyratory motion (a cardioid), which causes a variable g-force to act on the column during each rotation. This motion causes the column to see one partitioning step per revolution and components of the sample separate in the column due to their partitioning coefficient between the two immiscible liquid phases. Development of instruments generating higher g-force and having larger bore of the column has enabled a great increase in throughput of HPCCC systems in recent years, due to improved mobile phase flow rates and a higher stationary phase retention.

The components of a CCC system are similar to most liquid chromatography configurations, such as high-performance liquid chromatography. One or more pumps may be used to deliver the phases to the column which is the CCC instrument itself. Samples may be introduced into the column through a sample loop. The outflow may be monitored with various detection methods, such as ultraviolet-visible spectroscopy or mass spectrometry. The operation of the pumps, the CCC instrument, sample injection, and detection may be controlled manually or with a microprocessor.

All CCC separation processes involve three main stages: mixing, settling, and separation of the two phases (although they often occur continuously). Vigorous mixing is important in order to maximize the interfacial area between the phases and facilitate mass transfer. The dissolved compounds will distribute between the phases according their distribution coefficients (K_{D}), also sometimes referred to as partition coefficient, distribution constant, or partition ratio and represented by P, K, D, or Kc.

CCC separation typically starts with choosing an appropriate biphasic solvent system for the desired separation. The two solvent phases are then fed from opposite ends of the column, brought into contact with each other, and each phase collected at the end of the column opposite to the end to which it was fed. The flow rate of the phases may be the same or different, and can be adjusted in order to optimize the separation.

Typically, neither of the two phases will be entirely "stationary" as might be the case in a solid-state chromatography column. Instead, both phases will typically be subject to at least some degree of replacement and/or recirculation. In some cases, the replacement rate of the polar and non-polar phase may be of the same order of magnitude, whereas in other cases, the replacement rate of one phase may be much greater than the replacement rate of the other phase. In the latter case, the phase with the low replacement rate may be viewed as the "stationary" phase, and the phase with the high replacement rate may be viewed as the mobile phase. The term stationary phase, as used herein, is thus used to denote a phase with a relatively low replacement rate, as compared to a mobile phase with a relatively high replacement rate.

In the CCCC step of the present disclosure, the methanol to be purified constitutes one of the two phases, and the other phase, also referred to herein as "the non-polar phase", should be selected accordingly, i.e. a non-polar phase having low solubility for methanol while having high solubility for sulfur or organosulfur impurities present in the methanol. Preferably, the solvent should also have high solubility for terpenes, so as to allow for simultaneous separation of CST present in the methanol.

Selection of suitable solvents may be guided by CCC literature, optionally combined with thin layer chromatography. A solvent system can be tested with a one-flask partitioning experiment. The measured partition coefficient from the partitioning experiment will indicate the elution behavior of the compound.

The CCCC comprises contacting the methanol comprising sulfur-containing compounds, as the polar phase, with a non-polar phase immiscible with methanol. In some embodiments, the CCCC step is conducted by feeding methanol and the non-polar phase from opposite ends of a column, bringing the two phases into contact with each other, and collecting each phase at the end of the column opposite to the end to which it was fed.

In some embodiments, the CCCC step is conducted using the methanol as the mobile phase and a non-polar phase as the stationary phase.

In some embodiments, the CCCC step is conducted using the methanol as the stationary phase and a non-polar phase as the mobile phase.

The non-polar phase may comprise a single solvent or a mixture of two or more solvents.
the non-polar phase of the CCCC comprises a non-polar hydrocarbon solvent immiscible with methanol.

In some embodiments of the desulfurization method, the non-polar phase of the CCCC comprises an alkane or a mixture of alkanes. The non-polar phase of the CCCC may for example comprise an alkane selected from the group consisting of pentane, hexane, heptane, cyclopentane, cyclohexane and cycloheptane, or a mixture thereof. In addition to being immiscible with methanol and providing high solubility for organosulfur impurities present in the methanol, these solvents also have high solubility for terpenes, which allows for simultaneous separation of CST present in the methanol. In preferred embodiments the non-polar phase of the CCCC comprises an alkane selected from the group consisting of pentane, hexane, heptane and cyclohexane, or a mixture thereof, more preferably heptane.

The miscibility of methanol with non-polar solvents is also dependent on the water content of the methanol. A high water content in the polar methanol phase expands the range of solvents that can be used in the non-polar phase of the CCCC. This means that when the polar phase comprises a mixture of methanol and water, other non-polar solvents besides alkanes and cycloalkanes may be used in the non-polar phase. Thus, when the polar phase comprises a mixture of methanol and water the non-polar phase of the CCCC may for example comprise a solvent selected from the group consisting of pentane, hexane, heptane, cyclopentane, cyclohexane and cycloheptane, benzene, toluene, diethyl ether, chloroform or dichloromethane, or a mixture thereof.

Water can be added to finetune the distribution coefficients of sulfur compounds and methanol for optimal separation and phase separation in the CCCC step. Thus, in some embodiments of the desulfurization method, water is added to the polar phase of the CCCC.

The CCCC step may advantageously be combined with distillation as an efficient means for removing certain fractions of sulfur-containing compounds from the methanol. Thus, according to some embodiments, the desulfurization method further comprises the step of subjecting methanol comprising sulfur-containing compounds to distillation to remove low boiling sulfur-containing compounds, wherein the distillation step is performed prior or subsequent to the CCCC step.

A distillation step may be especially useful for removing low boiling sulfur-containing compounds, such as DMS. The distillation may be performed prior or subsequent to the CCCC step, or both prior and subsequent to the CCCC step. The distillation may be performed continuously or as batch operation. A boiler is filled with Kraft methanol and heated up to the point where the lightest compounds begin to boil off. This light fraction, often referred to as "heads" will contain mostly low boiling sulfur compounds.

In some embodiments, the distillation step is performed prior to the CCCC step. Performing distillation prior to the CCCC step is preferred since a large portion of low boiling sulfur-containing compounds, e.g. dimethyl sulfide (DMS) can be efficiently removed, allowing for the capacity of the CCCC to be used for removal of higher boiling compounds like dimethyl disulfide, which are not as easily removed by distillation.

In some embodiments, the distillation step is performed subsequent to the CCCC step. Performing distillation subsequent to the CCCC step is sometimes preferred, as it allows for the simultaneous removal of remaining low boiling sulfur-containing compounds and removal of water and remaining CST.

The desulfurized methanol obtained from the CCCC step may typically have a relatively high water content, including water present from the Kraft methanol production and /or water added to the methanol in order to finetune the distribution coefficients of sulfur compounds and methanol in the CCCC step. In some embodiments, the desulfurization method further comprises the step of:
subsequent to the CCCC step, subjecting the methanol to distillation to remove water from the methanol.

In some embodiments, the sulfur-containing compounds include at least one of elemental sulfur, DMS and DMDS. Whereas low boiling compounds like DMS can be removed with reasonable efficiency using conventional methods like distillation, DMDS is more difficult to remove to an acceptable level because of the presence of an azeotrope between methanol and DMDS. CCCC provides for efficient removal of dimethyl disulfide from methanol to very low levels.

Using CCCC, optionally combined with distillation, high purity methanol can be obtained. In some embodiments, the methanol after being subjected to CCCC, and optionally distillation, has a sulfur level of less than 20 ppm, preferably less than 10 ppm, more preferably less than 5 ppm.

The obtained methanol, after being subjected to CCCC, and optionally distillation preferably fulfils the purity requirement for commercial grade methanol of at least 98.85%. This degree of purity is not achievable by conventional distillation techniques using Kraft methanol as the starting material. Accordingly, in some embodiments, the methanol after being subjected to CCCC, and optionally distillation, has purity of at least 98.85 %.

The method of the present disclosure is especially useful for the purification of methanol obtained from a Kraft pulping process. The Kraft methanol is obtained as a complex mixture comprising, in addition to methanol, sulfur-containing compounds and water, also typically a significant amount of crude sulfate turpentine (CST). CST is a commercial product and it is sold mainly to distillers who fractionate it to sulfur free turpentine and/or to individual terpenes to be sold as fine chemicals. The inventors have identified that using the desulfurization method of the present disclosure, CST can also be recovered as an additional product stream from the CCCC step. During the CCCC step, CST will accumulate in the non-polar phase. The CST terpenes may then be readily recovered in connection with recycling/distillation of the non-polar phase.

In some embodiment, wherein the methanol obtained from a Kraft pulping process further comprises crude sulfate turpentine (CST), the method further comprises the step of recovering CST collected in the non-polar phase of the CCCC.

The inventor has surprisingly found that CCCC can be used as a viable alternative to previous solutions for desulfurization of methanol, and particularly Kraft methanol. The use of CCCC allows for purification and desulfurization of methanol comprising sulfur-containing compounds, particularly Kraft methanol, using simple distillation procedures and resulting in desulfurized methanol or having reduced levels of sulfur and organosulfur compounds as impurities. The use of CCCC may also offer additional advantages, including environmental, health and/or economic benefits of reduced emission of chemicals used in the prior art methods for acid or alkaline oxidation treatments.

Thus, according to a second aspect illustrated herein, there is provided the centrifugal countercurrent chromatography (CCCC) for removing sulfur-containing compounds from methanol.

The use according to the second aspect may be further defined as set out above with reference to the method of the first aspect. Particularly, the CCCC of the inventive use may be selected from the group consisting of centrifugal partition chromatography (CPC), high-performance countercurrent chromatography (HPCCC) and high-speed countercurrent chromatography (HSCCC). In some embodiments of the inventive use, the CCCC is selected from the group consisting of high-performance countercurrent chromatography (HPCCC) and high-speed countercurrent chromatography (HSCCC). In a preferred embodiment, the CCCC is HPCCC.

Also, the methanol product obtained from a desulfurization method according to the present disclosure may have advantages as compared to desulfurized methanol products obtained using prior art desulfurization methods. As an example, a desulfurized Kraft methanol product obtained from a desulfurization method according to the present disclosure will not comprise unwanted oxidation residues or byproducts to the same extent as Kraft methanol products obtained using oxidation based desulfurization methods.

### Example - Extraction of Kraft methanol with Heptane

2 ml crude methanol obtained from a Kraft-pulping process was extracted in a glass extraction funnel with an equal volume of heptane (99 %, Sigma Aldrich). After mixing and settling in ambient temperature, the distribution coefficients where determined by measuring the content of the respective compounds in the two phases by GC-TQ (gas chromatography - triple quadrupole mass spectrometry) using 1-fluoronaphthalene as an internal standard.

Distribution coefficients (K_{D}) of 1.1 and 20.7 were measured for dimethyl disulfide and α-pinene, respectively.

## Claims

1. A method for removing sulfur-containing compounds from methanol, said method comprising the step of:
subjecting methanol comprising sulfur-containing compounds to centrifugal countercurrent chromatography (CCCC) to remove sulfur-containing compounds.

2. A method according to claim 1, further comprising the step of:
subjecting methanol comprising sulfur-containing compounds to distillation to remove low boiling sulfur-containing compounds, wherein the distillation step is performed prior or subsequent to the CCCC step.

3. A method according to claim 2, further comprising the step of:
subsequent to the CCCC step, subjecting the methanol to distillation to remove water from the methanol.

4. A method according to any one of the preceding claims, wherein the CCCC is selected from the group consisting of centrifugal partition chromatography (CPC), high-performance countercurrent chromatography (HPCCC) and high-speed countercurrent chromatography (HSCCC), preferably from the group consisting of high-performance countercurrent chromatography (HPCCC) and high-speed countercurrent chromatography (HSCCC), and more preferably wherein the CCCC is HPCCC.

5. A method according to any one of the preceding claims, wherein the CCCC comprises contacting the methanol comprising sulfur-containing compounds, as the polar phase, with a non-polar phase immiscible with methanol.

6. A method according to claim 5, wherein the non-polar phase of the CCCC comprises a non-polar hydrocarbon solvent immiscible with methanol.

7. A method according to any one of claims 5 or 6, wherein the non-polar phase of the CCCC comprises an alkane or a mixture of alkanes, preferably an alkane selected from the group consisting of pentane, hexane, heptane and cyclohexane, or a mixture thereof, more preferably heptane.

8. A method according to any one of claims 5-7, wherein water is added to the polar phase of the CCCC.

9. A method according to any one of the preceding claims, wherein the sulfur-containing compounds include at least one of elemental sulfur, dimethyl sulfide and dimethyl disulfide.

10. A method according to any one of the preceding claims, wherein the methanol comprising sulfur-containing compounds is methanol obtained from a Kraft pulping process.

11. A method according to claim 10, wherein the methanol obtained from a Kraft pulping process further comprises crude sulfate turpentine (CST).

12. A method according to claim 11, further comprising recovering CST collected in the non-polar phase of the CCCC.

## Patentansprüche

1. Verfahren zum Entfernen schwefelhaltiger Verbindungen aus Methanol, wobei das Verfahren den Schritt umfasst des:
Unterziehens von schwefelhaltige Verbindungen enthaltendem Methanol einer zentrifugalen Gegenstromchromatographie (CCCC) zum Entfernen schwefelhaltiger Verbindungen.

2. Verfahren nach Anspruch 1, ferner umfassend den Schritt des:
Unterziehens von schwefelhaltige Verbindungen enthaltendem Methanol einer Destillation zum Entfernen niedrig siedender schwefelhaltiger Verbindungen, wobei der Destillationsschritt vor oder nach dem CCCC-Schritt durchgeführt wird.

3. Verfahren nach Anspruch 2, ferner umfassend den Schritt des:
Unterziehens des Methanols, nach dem CCCC-Schritt, einer Destillation zum Entfernen von Wasser aus dem Methanol.

4. Verfahren nach einem der vorhergehenden Ansprüche, wobei die CCCC ausgewählt ist aus der Gruppe bestehend aus Zentrifugalpartitionschromatographie (CPC), Hochleistungs-Gegenstromchromatographie (HPCCC) und Hochgeschwindigkeits-Gegenstromchromatographie (HSCCC), bevorzugt aus der Gruppe bestehend aus Hochleistungs-Gegenstromchromatographie (HPCCC) und Hochgeschwindigkeits-Gegenstromchromatographie (HSCCC), und noch bevorzugter, wobei die CCCC HPCCC ist.

5. Verfahren nach einem der vorhergehenden Ansprüche, wobei die CCCC das Inkontaktbringen des schwefelhaltige Verbindungen enthaltenden Methanols als polare Phase mit einer nichtpolaren, mit Methanol nicht mischbaren Phase umfasst.

6. Verfahren nach Anspruch 5, wobei die nichtpolare Phase der CCCC ein nichtpolares, mit Methanol nicht mischbares Kohlenwasserstofflösungsmittel umfasst.

7. Verfahren nach einem der Ansprüche 5 oder 6, wobei die nichtpolare Phase der CCCC ein Alkan oder ein Gemisch von Alkanen, bevorzugt ein Alkan, ausgewählt aus der Gruppe bestehend aus Pentan, Hexan, Heptan und Cyclohexan, oder ein Gemisch davon, besonders bevorzugt Heptan, umfasst.

8. Verfahren nach einem der Ansprüche 5-7, wobei der polaren Phase der CCCC Wasser zugesetzt wird.

9. Verfahren nach einem der vorhergehenden Ansprüche, wobei die schwefelhaltigen Verbindungen zumindest eines von elementarem Schwefel, Dimethylsulfid und Dimethyldisulfid beinhalten.

10. Verfahren nach einem der vorhergehenden Ansprüche, wobei das schwefelhaltige Verbindungen enthaltende Methanol ein aus einem Kraft-Aufschlussverfahren erhaltenes Methanol ist.

11. Verfahren nach Anspruch 10, wobei das aus einem Kraft-Aufschlussverfahren erhaltene Methanol ferner Rohsulfatterpentin (CST) enthält.

12. Verfahren nach Anspruch 11, ferner umfassend die Gewinnung von in der nichtpolaren Phase der CCCC gesammeltem CST.

## Revendications

1. Procédé d'élimination de composés contenant du soufre du méthanol, ledit procédé comprenant l'étape consistant à :
soumettre du méthanol comprenant des composés contenant du soufre à une chromatographie à contre-courant (CCC) pour éliminer les composés contenant du soufre.

2. Procédé selon la revendication 1, comprenant en outre les étapes consistant à :
soumettre du méthanol comprenant des composés contenant du soufre à une distillation pour éliminer des composés contenant du soufre à bas point d'ébullition, dans lequel l'étape de distillation est réalisée avant ou après l'étape de CCC.

3. Procédé selon la revendication 2, comprenant en outre les étapes consistant à :
après l'étape de CCC, soumettre le méthanol à une distillation pour éliminer l'eau du méthanol.

4. Procédé selon l'une quelconque des revendications précédentes, dans lequel la CCC est choisie dans le groupe constitué par la chromatographie de partage centrifuge (CPC), la chromatographie à contre-courant haute performance (CCCHP) et la chromatographie à contre-courant à haute vitesse (CCCHV), de préférence dans le groupe constitué par la chromatographie à contre-courant haute performance (CCCHP) et la chromatographie à contre-courant à haute vitesse (CCCHV), et de manière davantage préférée dans lequel la CCC est la CCCHP.

5. Procédé selon l'une quelconque des revendications précédentes, dans lequel la CCC comprend la mise en contact du méthanol comprenant des composés contenant du soufre, en tant que phase polaire, avec une phase non polaire non miscible avec le méthanol.

6. Procédé selon la revendication 5, dans lequel la phase non polaire de la CCC comprend un solvant hydrocarboné non polaire non miscible avec le méthanol.

7. Procédé selon l'une quelconque des revendications 5 ou 6, dans lequel la phase non polaire de la CCC comprend un alcane ou un mélange d'alcanes, de préférence un alcane choisi dans le groupe constitué par le pentane, l'hexane, l'heptane et le cyclohexane, ou un mélange de ceux-ci, de préférence l'heptane.

8. Procédé selon l'une quelconque des revendications 5 à 7, dans lequel de l'eau est ajoutée à la phase polaire de la CCC.

9. Procédé selon l'une quelconque des revendications précédentes, dans lequel les composés contenant du soufre comprennent au moins l'un parmi soufre élémentaire, sulfure de diméthyle et disulfure de diméthyle.

10. Procédé selon l'une quelconque des revendications précédentes, dans lequel le méthanol comprenant des composés contenant du soufre est du méthanol obtenu à partir d'un procédé de fabrication de pâte Kraft.

11. Procédé selon la revendication 10, dans lequel le méthanol obtenu à partir d'un procédé de fabrication de pâte Kraft comprend en outre de la térébenthine de sulfate brute (CST).

12. Procédé selon la revendication 11, comprenant en outre la récupération de la CST recueillie dans la phase non polaire de la CCC.
